# EUROPEAN PATENT APPLICATION

(11) **EP 2 237 004 A1**
(43) Date of publication of application: **06.10.2010**
(21) Application number: 10158534.7
(22) Date of filing: 30.03.2010
(51) Int. Cl.: G01H 11/06, G01P 15/125, H02N 1/06, H02N 1/00

(54) **Wireless unit for measuring and transmitting dynamic loads, waggon comprising said unit, and corresponding control method**

(30) Priority: 31.03.2009 IT TO20090247
(71) Applicant: Politecnico di Torino, 10129 Turin (IT)
(72) Inventor: De Pasquale, Giorgio, 13897, Occhieppo Inferiore (IT); Soma', Aurelio, 12038, Savigliano (IT)
(74) Representative: Jorio, Paolo

(57) **Abstract**

A measurement and transmission wireless unit comprises a casing (8) defining a hole, a MEMS vibration sensor (3), a transmitter (6), a battery (2) for supplying the MEMS vibration sensor (3) and the transmitter (6), a mechanical-to-electrical energy scavenger of a MEMS type (5) for recharging the battery (2), and a support (7) mounted on which are said sensor (3), said transmitter (6), said battery (2), and said energy scavenger (5), the support (7) being rigidly fixed to the casing (8) within said hole.

## Description

The present invention relates to a measuring and transmitting wireless unit for detecting and sending data on the dynamic load of a mechanical device, such as for example a bogie, and to a bogie comprising said unit. The present invention moreover relates to a method for controlling said wireless unit.

Measurement of the loads on a bogie is essential for monitoring the state of wear of the rolling stock and carrying out maintenance operations only when it is necessary. In fact, maintenance operations are costly and entail stoppage times that reduce the profits linked to the use of the rolling stock. However, maintenance operations are of extreme importance for preventing failures or damage during running of the train. It is consequently very important to apply reliable diagnostic methods for establishing the conditions of the rolling stock and programming the maintenance operations in an efficient way and such as to reduce the costs for management of the rolling stock itself.

In particular, carriages of a passenger train are electrified, and it is hence possible, if necessary, to equip the bogie with sensors and transmitters supplied by the line current. Instead, wagons of a freight train are not connected to the electrical supply, and the on-board instrumentation for diagnostics calls for installation of wiring for supply and data transmission starting from the locomotive and along the entire train. Said diagnostic system is clearly costly and also entails complex maintenance since, in the event of malfunctioning and in particular of an interruption of the electrical contact, it is necessary to carry out tests on the wiring along the entire train.

Furthermore, trains, and in particular freight trains, are subject to severe standards that restrict the possibilities of modifying the carriages. In particular, adding instrumentation for carrying out measurements on the bogie is not normally allowed without a new type approval that involves high costs for its execution and in terms of down time.

The aim of the present invention is to provide a unit for measuring and transmitting dynamic loads to limit the drawbacks specified above.

The aim of the present invention is achieved by a miniaturized measurement and transmission unit according to Claim 1. In particular, a wireless microsystem is provided with autonomous supply by means of recovery of the energy from vibrations for monitoring bogies and corresponding components.

For a better understanding of the present invention, it will be further described with reference to the attached drawings, wherein:
- Figure 1 is an exploded perspective view of the transmission and measurement unit according to the present invention, which can, for example, be installed within a connection screw;
- Figure 2 is a perspective view of a component of the unit of Figure 1; and
- Figure 3 is a perspective view of a bogie on which the unit of Figure 1 can be mounted.

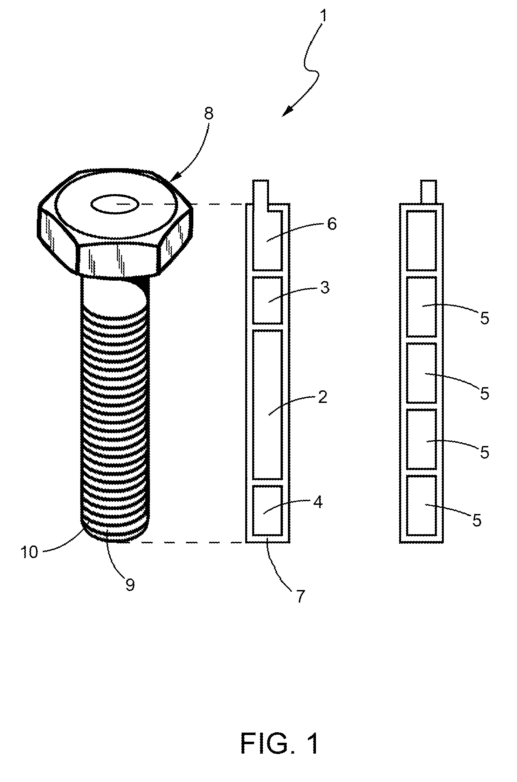

Designated as a whole by 1 in Figure 1 is a unit for detecting and transmitting data on the dynamic load applied to a bogie, in particular for a wagon for transport of freight.

The unit 1 comprises a processor for processing a rechargeable battery 2, for example a rechargeable battery normally available on the market, an MEMS inertial sensor 3, a sensor of a second physical quantity, such as for example a temperature sensor 4, at least one MEMS converter for converting mechanical energy into electrical energy (energy scavenger) 5, and a transmitter 6 provided with an antenna. The unit 1 further comprises three electronic components, such as:
a first rectifier device for converting the alternating current generated by the MEMS energy scavenger 5;
a second device, which stabilizes the output voltage of the scavenger 5 at a constant nominal value; this is connected to the MEMS inertial sensor 3 and defines the constant voltage level with respect to which the variations of voltage due to the vibrations are detected; and
a third microchip device for processing the analog signals measured by the sensors. Preferably, processing occurs at discrete threshold levels to be transmitted.

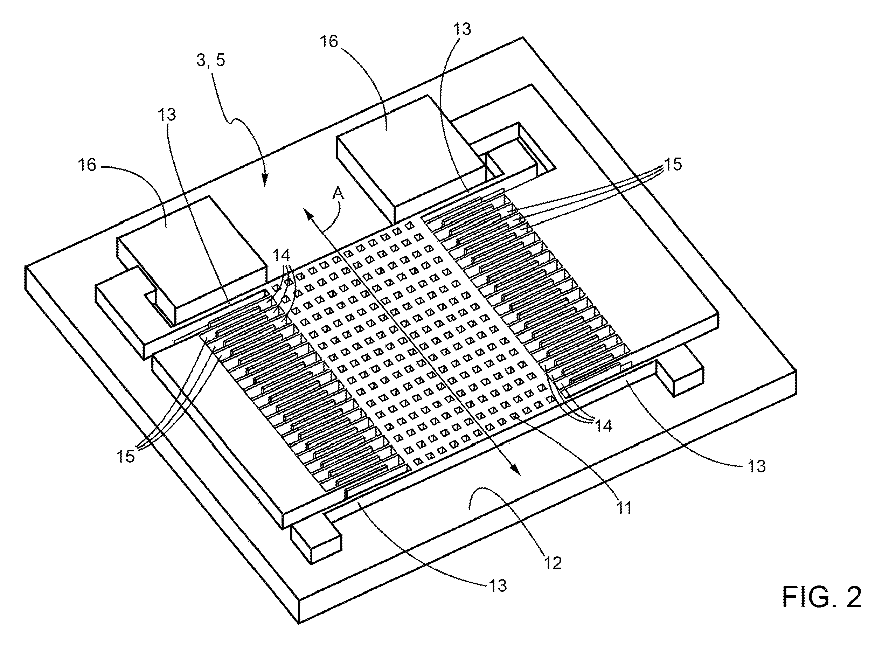

According to the present invention, the inertial sensor 3 is of a capacitive type and is miniaturized via the use of MEMS technologies, such as techniques of micromachining of silicon that comprise a photolithographic step and that derive from machining operations on the integrated circuits (bulk micromachining, surface micromachining, etc.). Advantageously, the inertial sensor 3 is constituted by a plurality of uniaxial devices (one example is illustrated in Figure 2), arranged along orthogonal axes so as to be able to detect the vibrations at least along two, preferably mutually orthogonal, axes contained in a plane perpendicular to the rails, i.e., along the axis Z (vertical direction) and along the axis Y (lateral direction). The signal-processing device will enable processing of the signals of the inertial sensor 3, thus supplying at output an RMS value of the vibrations to be transmitted by means of the device 6.

The MEMS energy scavenger 5 is a miniaturized device configured for converting kinetic energy into electrical energy and, in particular, for charging the battery 2. According to a preferred embodiment, the MEMS energy scavenger 5 is also uniaxial and has the same structure as the inertial sensor 3; i.e., it comprises one or more uniaxial devices, each of which has the same structure in plan view as the one/ones used for providing the inertial sensor 3. In particular, Figure 2 represents the structure of a uniaxial device designed for the function of energy generation (microscavenging) and of detection (micro-accelerometer); the difference between the two functions is produced only by the mode of supply and connection in the electrical circuit.

The MEMS energy scavengers 5 can in turn be mounted along mutually perpendicular axes, preferably coinciding or parallel to the axes Z and Y of the devices comprised in the inertial sensor 3.

Advantageously, the battery 2, the MEMS inertial sensor 3, the temperature sensor 4, the MEMS energy scavengers 5, and the transmitter 6 are electrically connected to one another and are mounted on a support 7 (illustrated in Figure 1 are the two opposite faces of the support 7) embedded inside a screw 8 of the unit 1. In particular, the screw 8 has a hole preferably concentric to a threaded stem 9 of the screw 8. The MEMS components referred to above mounted on the support 7 are covered with a casing (not illustrated) and the support 7, once all the other components have been fixed, is mounted in the hole of the screw and fixed via a polymeric resin that, after being hardened, transmits the mechanical vibrations from the screw 8 to the MEMS inertial sensor 3 and can perform the action of filter for high-frequency vibrations. For example, the resin can be an epoxy-matrix resin. Preferably, the screw 8 is the screw of a bushing that radially supports the axle of the bogie of the freight-train wagon, and the temperature sensor 4 is set in the proximity of a bottom portion 10 of the stem 9 to be as close as possible to the bearing of the bushing and detect the temperature thereof. According to a particularly preferred embodiment, the hole in the screw 8 can be, for example, a through hole and the temperature sensor 4 is in contact with the bushing of the bearing of the axle.

The unit 1 forms part of a monitoring system comprising a local control unit mounted on the wagon and a main control unit mounted on the locomotive and provided with alarm and/or display devices for warning the train driver of any anomalies. Each local control unit can be equipped with an electromechanical energy scavenger of its own that is more powerful than that of the unit 1. Preferably, the unit 1 and the respective local control unit, and the local control units and the main control unit communicate via wireless protocols, advantageously with low energy consumption and at short range, such as the IEEE 802.15.4 protocol or else for example the protocol known as 'ZigBee' (registered trademark) developed by ZigBee Alliance.

Figure 2 illustrates a MEMS inertial sensor 3/MEMS energy scavenger 5 that can be used in a unit according to the present invention. The MEMS inertial sensor 3 comprises a seismic mass 11 suspended on a substrate 12 via leaf springs 13. Preferably, the seismic mass 11 and the leaf springs 13 define a single body made of a semiconductor material, such as silicon. The leaf springs 13 are considerably more flexible in a direction A, indicated in the figure by the arrow, and are configured so that the seismic mass 11 can vibrate in the direction A. Preferably, the leaf springs 13 are rectilinear and are parallel to one another and orthogonal to the direction A.

Advantageously, the MEMS inertial sensor 3/MEMS energy scavenger 5 is capacitive. The capacitance is defined via a plurality of projections 14 fixed with respect to the seismic mass 11 and transverse with respect to the direction A. According to a preferred embodiment, the projections 14 are rectilinear and orthogonal to the direction A. The projections 14 are set between corresponding finger-like projections 15 fixed with respect to the substrate 12. Preferably, the projections 14 and the finger-like projections 15 have the same shape, in particular rectilinear, and the same length. Via pads 16, a difference of potential is applied to the projections 14 and the finger-like projections 15 so that there is defined a capacitance C that varies as a function the relative positions of the projections 14 and the finger-like projections 15.

The sensor 3/scavenger 5 is uniaxial, i.e., the seismic mass 11 vibrates substantially only in the direction A. To detect the vibrations along the axes Y and Z previously referred to, it is possible to provide at least one pair of devices such as the ones illustrated in Figure 2 and described previously, where the directions A are mutually perpendicular and respectively parallel to the axes Y and Z as defined previously.

In use, the condition of operation that enables scavenging of most of the energy from the vibrations is the resonance of the seismic mass 11. However, the vibrations that stress the bogie have a wide spectrum of frequencies. The unit 1 is consequently built in such a way as to enable scavenging of the energy in an effective way and envisages more than one resonance frequency for the converters 5. In one embodiment, the converters 5 have qualitatively the same constructional scheme, which is also the same as that of the sensors 3, e.g., number of projections 14, 15, shape of the seismic mass 11, etc. They differ, however, quantitatively on account of the thickness of the leaf springs 13 and/or the weight of the seismic mass 11. In this way, the dynamic characteristics of each sensor are different from those of the others, and in particular the resonance frequency is different. According to a further embodiment, it is possible to apply via the battery 2 an initial voltage to the scavenger 5. Said initial voltage entails an elastic preloading on the leaf springs 13 that changes the resonance frequency of the converter. In particular, the lowest resonance frequency corresponds to the condition in which no initial voltage is applied. In the latter case, a single converter can have more than one resonance frequency, and the management of the initial voltage is controlled via a processor mounted on board the support 7.

In use, the bogie is subjected to dynamic loads of various nature, for example when the train is going around a bend and/or on account of the heterogeneity of the solidity of the embankment and/or on account of effects of wear of the rails and the dynamics of the vehicle due to the wheel-rail contact. The mechanical vibrations are converted into electrical energy for charging the battery 2 via the MEMS energy scavengers 5.

The battery 2 supplies both the inertial sensor 2 and the temperature sensor 4. The battery 2 moreover supplies the transmitter 6, which sends the data to the control unit mounted on the wagon and/or on the one present in the locomotive.

According to a preferential method of operation of the unit 1, the sensors 3, 4 detect values respectively of the RMS level of vibrations and of temperature only when the battery 2 is charged and when it is necessary. For example, it is possible for the unit 1 to comprise an electric switch that closes the circuit automatically when the battery 2 reaches a given charge in terms of output voltage. Alternatively, it is possible for the unit 1 to be programmed so as to have a second transmission channel that activates the transmission of the data detected by the sensors 3, 4 only upon request. Furthermore, the temperature signal and/or the RMS level of vibration are transmitted only if their value exceeds a predetermined threshold considered critical and consequently to be signalled.

The advantages that the unit 1 according to the present invention affords are described in what follows.

Monitoring of a freight train can be executed reliably and precisely with zero energy consumption since all the energy required by the sensors 3, 4 is supplied by the MEMS energy scavengers 5. In this way, it is not necessary to obtain new type approval for the wagon.

The fact that the MEMS sensor 3 and the MEMS energy scavengers 5 have the same structure, i.e., the same structure in plan view, simplifies the process of definition of the mask for the photolithographic process. In fact, once the characteristics of the structural module have been established, it is possible to use repeatedly the module identified both for the sensor/sensors 3 and for the converter/converters 5 according to the dynamic loads that are to be measured and the energy necessary for the unit 1 for measuring and transmitting. In this way, the mask for the photolithographic process will thus only require the step of drawing of the pads and of the electrical-connection paths.

When the unit 1 is mounted in a screw, it is not necessary to apply instrumentation on the bogie, and the unit can be entirely built and tested remotely, i.e., not in the workshop where maintenance of the bogie is carried out. Furthermore, assembly does not involve skilled labour for application of instrumentation for carrying out dynamic measurements.

Detecting the RMS level of the vibrations and not the value of the quantity continuously enables reduction of the operating energy of the unit 1.

Finally, it is clear that modifications or variations may be made to the unit 1 described and illustrated herein, without thereby departing from the sphere of protection, as specified in the annexed claims.

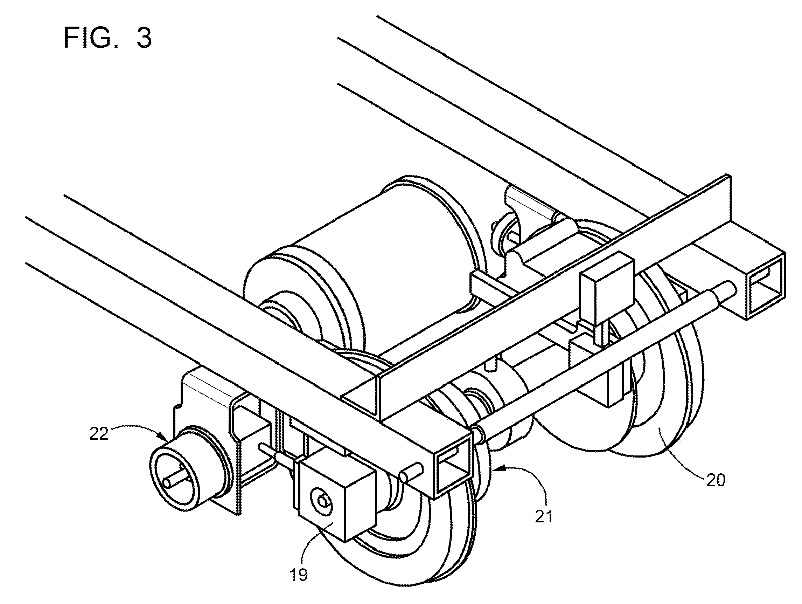

For example, with reference to Figure 3, the unit 1 can be used, when it has the screw 8, for fixing the bearings 19 of an axle 20. Furthermore, the unit 1 can be a member of a braking system 21, for example the support 7 can be mounted in a hole of a brake calliper, or else can be a member of a primary suspension 22 of the bogie. The primary suspensions in railway vehicles enable mechanical connection of the axle to the chassis of the bogie by means of elastic elements (springs) and possible damping elements (shock absorbers).

Furthermore, the uniaxial devices that constitute the MEMS energy scavenger 5 can present both different orientations of the axis A and weights and/or stiffnesses that are different from one another so as to have respective resonance frequencies that are different and thus extend the range of frequencies that afford a high efficiency as regards generation of energy for supplying the device/devices comprised in the MEMS inertial sensor 3.

## Claims

1. A measuring and transmitting wireless unit comprising a casing (8) defining a hole, a MEMS vibration sensor (3), a transmitter (6), a battery (2) for supplying said MEMS vibration sensor (3) and said transmitter (6), a mechanical-to-electrical energy scavenger of a MEMS type (5) for recharging said battery (2), and a support (7), mounted on which are said sensor (3), said transmitter (6), said battery (2), and said energy scavenger (5), said support (7) being rigidly fixed to said casing inside said hole.

2. The unit according to Claim 1, **characterized in that** said MEMS vibration sensor (3) and said MEMS mechanical-to-electrical energy scavenger (5) are obtained via a photolithographic process and have the same structure in plan view.

3. The unit according to Claim 1 or Claim 2, **characterized in that** at least one between said MEMS vibration sensor (3) and said MEMS mechanical-to-electrical energy scavenger (5) comprises a uniaxial device.

4. The unit according to any one of the preceding claims, **characterized in that** it comprises means for controlling the initial pre-loading of elastic means (13) of said MEMS mechanical-to-electrical energy scavenger (5) for controlling the resonance frequency of said converter.

5. The unit according to any one of the preceding claims, **characterized in that** said casing is a threaded element.

6. The unit according to any one of the preceding claims, **characterized in that** said MEMS vibration sensor (3) measures an RMS level.

7. A bogie comprising a measuring and transmitting unit according to any one of the preceding claims.

8. The bogie according to Claims 5 and 6, **characterized in that** said unit comprises a temperature sensor (4) set in a position corresponding to an end portion of said threaded casing.

9. A railway wagon or carriage comprising a unit according to any one of Claims 1 to 6 or a bogie according to either Claim 7 or Claim 8, **characterized in that** it comprises a local control unit configured for being connected via a wireless communication protocol to said unit (1) and for forming a radio bridge with further control units of other wagons or carriages, said control unit comprising an electromechanical energy scavenger for supplying its own function of communication with said unit (1) and radio-bridge function.

10. A method for controlling a unit according to any one of the preceding claims, **characterized in that** it comprises the step of sending the data coming from said MEMS vibration sensor (5) via said transmitter (6) only when said data have a value higher than a pre-set threshold.
